# DEMANDE DE BREVET EUROPEEN

(11) **EP 2 017 550 A2**
(43) Date de publication de la demande: **21.01.2009**
(21) Numéro de dépôt: 08356108.4
(22) Date de dépôt: 18.07.2008
(51) Int. Cl.: F24H 9/20

(54) **Dispositif de pilotage pour économiser l'énergie d'un chauffe eau**

(30) Priorité: 20.07.2007 FR 0705254
(71) Demandeur: Cotherm, 38470 Vinay (FR)
(72) Inventeur: Roques, Bernard, 38850 Bilieu (FR)
(74) Mandataire: Schmitt, John

(57) **Abrégé**

Le dispositif de pilotage pour économiser l'énergie destinée à chauffer l'eau contenue à l'intérieur d'un chauffe eau (30) comporte :
• un dispositif de détection électronique (21) permettant de mesurer la quantité d'eau chaude restante à l'intérieur de la cuve (2), ledit dispositif de détection électronique (21) étant constitué d'un tube capillaire (10) contenant un fluide caloporteur et d'un dispositif d'amplification (15) relié à une carte électronique de pilotage (26), ledit dispositif d'amplification (15) disposé à l'extérieur de la cuve (2) du chauffe eau (30) permettant de transmettre sous l'effet de la dilatation du fluide contenu dans le tube capillaire (10) une variation de résistance à un système électronique de pilotage (26),
• et des moyens de contrôle (50) reliés à la carte électronique de pilotage (26) permettant de déterminer le profil de consommation d'eau chaude des utilisateurs afin de piloter la ou les périodes de relance de chauffe de l'eau contenue dans la cuve (2).

## Description

La présente invention est relative à un dispositif de pilotage permettant de réaliser des économies d'énergie sur un chauffe eau à accumulation électrique, électro solaire, hydro solaire en optimisant les périodes et les durées des relances de chauffe de l'eau contenue dans ledit chauffe eau.

Les relances de chauffe de l'eau contenue dans le chauffe eau peuvent être réalisées par exemple par l'intermédiaire d'une chaudière, d'une pompe à chaleur, ou de résistances électriques.

On connaît d'après le brevet européen EP 1 281 940 un dispositif de détection du niveau d'un fluide à l'intérieur d'un chauffe eau à accumulation électrique. Le dispositif de détection comporte un tube capillaire comportant des serpentins ou des renflements formant un dispositif d'amplification logé à l'intérieur de la cuve du chauffe eau.

Ce dispositif de détection permet uniquement aux utilisateurs de connaître le volume d'eau chaude consommée. Le dispositif de détection décrit dans le brevet antérieur EP 1 281 940 ne permet pas d'optimiser les périodes et les durées des relances de chauffe de l'eau contenue dans le chauffe eau.

Ainsi, le dispositif de pilotage suivant la présente invention a pour objet de fournir une information continue de la quantité d'eau chaude restante dans la cuve du chauffe eau et de réaliser des économies d'énergie sur un chauffe eau à accumulation électrique, électro solaire, hydro solaire en optimisant les périodes et les durées des relances de chauffe de l'eau contenue dans ledit chauffe eau afin de minimiser les pertes thermiques du chauffe eau au travers de son isolation.

Le dispositif de pilotage pour économiser l'énergie destinée à chauffer l'eau contenue à l'intérieur d'un ballon de stockage et plus particulièrement à l'intérieur d'une cuve d'un chauffe eau comportant une entrée d'eau froide et une sortie d'eau chaude suivant la présente invention comporte :
- un dispositif de détection électronique permettant de mesurer la quantité d'eau chaude restante à l'intérieur de la cuve, ledit dispositif de détection électronique étant constitué d'un tube capillaire contenant un fluide caloporteur et d'un dispositif d'amplification relié à une carte électronique de pilotage, ledit dispositif d'amplification permettant de transmettre sous l'effet de la dilatation du fluide contenu dans le tube capillaire une variation de résistance à la carte électronique de pilotage ;
- et des moyens de contrôle reliés à la carte électronique de pilotage permettant de déterminer le profil de consommation d'eau chaude des utilisateurs afin de piloter la ou les périodes de relance de chauffe de l'eau contenue dans la cuve.

Le dispositif de pilotage suivant la présente invention comporte un dispositif de détection électronique pourvu d'un tube capillaire placé soit à l'intérieur, soit à l'extérieur de la cuve du chauffe eau.

Le dispositif de pilotage suivant la présente invention comporte un tube capillaire prévu pour faire sensiblement la hauteur de la cuve du chauffe eau.

Le dispositif de pilotage suivant la présente invention comporte un dispositif de détection électronique comprenant un dispositif d'amplification constitué d'une membrane solidaire d'un capteur électronique relié par une connexion à la carte électronique de pilotage.

Le dispositif de pilotage suivant la présente invention comporte un tube capillaire raccordé hermétiquement à la membrane du dispositif d'amplification qui se déforme sous l'effet de la dilatation du fluide caloporteur.

Le dispositif de pilotage suivant la présente invention comporte un dispositif d'amplification relié par une connexion à la carte électronique de pilotage permettant le pilotage d'au moins une résistance de relance d'un chauffe eau électro ou hydro solaire.

Le dispositif de pilotage suivant la présente invention comporte des moyens de contrôle constitués d'un débitmètre placé sur l'entrée d'eau froide du chauffe eau et d'une sonde de température disposée en sortie d'eau chaude, ledit débitmètre et ladite sonde de température étant reliés à la carte électronique de pilotage.

Le dispositif de pilotage suivant la présente invention comporte un dispositif d'amplification relié par une connexion à la carte électronique de pilotage permettant le pilotage de la circulation d'un fluide caloporteur issu d'une chaudière dans un serpentin se trouvant à l'intérieur d'un chauffe eau hydro solaire.

Le dispositif de pilotage suivant la présente invention comporte un dispositif d'amplification relié par une connexion à la carte électronique de pilotage permettant le pilotage de la circulation d'un fluide caloporteur issu de capteurs solaires dans un serpentin se trouvant à l'intérieur d'un chauffe eau électro ou hydro solaire.

Le dispositif de pilotage suivant la présente invention comporte des moyens de contrôle pourvus d'une sonde de température placée sur l'entrée d'eau froide du chauffe eau et reliée à la carte électronique de pilotage.

Le dispositif de pilotage suivant la présente invention comporte des moyens de contrôle qui sont constitués d'un débitmètre et d'une sonde de température placés respectivement à l'entrée d'un serpentin se trouvant à l'intérieur de la cuve du chauffe eau, lesdits débitmètres et sondes de température étant reliés à la carte électronique de pilotage.

Le dispositif de pilotage suivant la présente invention comporte des moyens de contrôle qui sont constitués de sondes de température placées dans la cuve du chauffe eau, de manière à se trouver à proximité d'une résistance et des serpentins; lesdites sondes de température étant reliées à la carte électronique de pilotage par des connexions adaptées.

Les dessins annexés, donnés à titre d'exemple, permettront de mieux comprendre l'invention, les caractéristiques qu'elle présente et les avantages qu'elle est susceptible de procurer :

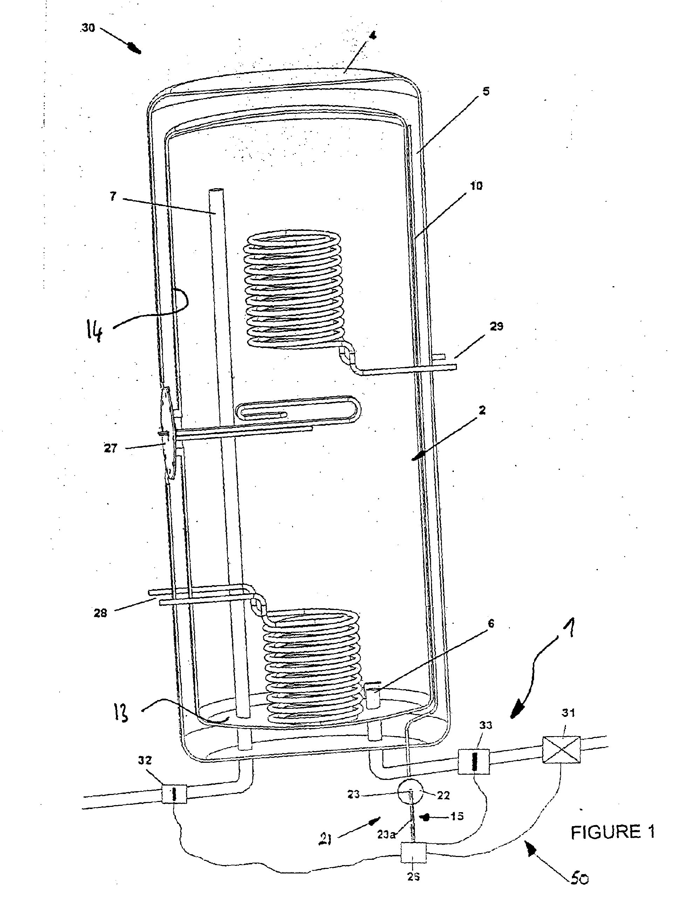

Figure 1 est une vue montrant un dispositif de pilotage électronique pour économiser l'énergie destinée à chauffer l'eau contenue à l'intérieur d'un ballon de stockage et plus particulièrement à l'intérieur d'une cuve d'un chauffe eau électro-solaire ou hydrosolaire suivant la présente invention.

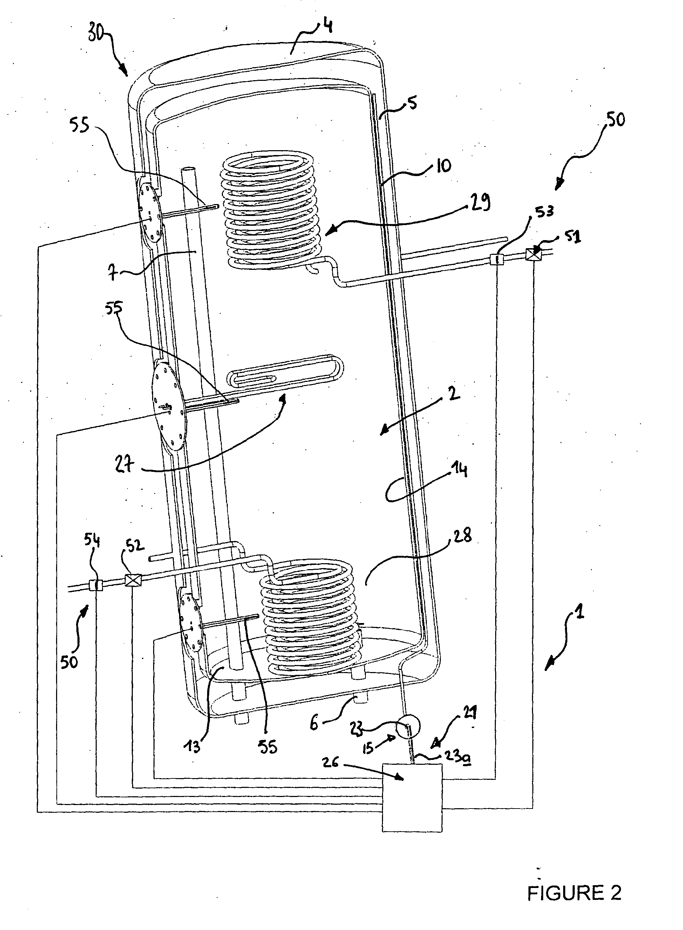

Figure 2 est une vue illustrant un mode de réalisation préféré du dispositif de pilotage électronique pour économiser l'énergie destinée à chauffer l'eau contenue à l'intérieur d'un ballon de stockage et plus particulièrement à l'intérieur d'une cuve d'un chauffe eau électro-solaire ou hydrosolaire suivant la présente invention.

On a montré en figure 1 un dispositif de pilotage électronique 1 pour économiser l'énergie destinée à chauffer l'eau contenue à l'intérieur d'un ballon de stockage et plus particulièrement à l'intérieur d'une cuve 2 d'un chauffe eau électro ou hydro solaire 30.

Le chauffe eau 30 est constitué d'une enveloppe extérieure 4 à l'intérieur de laquelle est disposée la cuve 2. Le chauffe eau 30 comporte entre l'enveloppe extérieure 4 et la cuve 2 un isolant thermique 5.

Le chauffe eau 30 comprend une entrée d'eau froide 6 et une sortie d'eau chaude 7 permettant le remplissage et l'extraction de l'eau contenue à l'intérieur de la cuve 2.

Le chauffe eau 30 comporte un serpentin 28 permettant la circulation d'un fluide chauffé par exemple par des capteurs solaires.

Dans ce type de chauffe eau électro ou hydro solaire 30 la relance de chauffe est assurée par une résistance électrique 27, ou par la circulation dans un serpentin 29 d'un fluide chauffé par une chaudière.

Le chauffe eau 30 comprend un dispositif de détection électronique 21 permettant de mesurer la quantité d'eau chaude restante à l'intérieur de la cuve 2.

Le dispositif de détection électronique 21 est constitué d'un tube capillaire 10 contenant un fluide caloporteur et d'un dispositif d'amplification 15 relié à une carte électronique de pilotage 26.

Le tube capillaire 10 est prévu d'une longueur identique à la hauteur de la cuve 2, qu'il soit placé à l'intérieur ou à l'extérieur de la dite cuve.

Lorsque le tube capillaire10 est placé à l'extérieur de la cuve 2, ce dernier est plaqué sous la couche de l'isolant thermique 5 et collé contre et sur toute la hauteur de la face externe verticale 14 de ladite cuve.

On note que sous l'action de la chaleur contenue dans l'eau, le fluide caloporteur retenu à l'intérieur du tube capillaire 10 se dilate.

Le dispositif d'amplification 15 est constitué d'une membrane 22 solidaire d'un capteur électronique ou jauge 23 relié(e) par une connexion 23a à la carte électronique de pilotage 26. A cet effet, le dispositif d'amplification 15 est placé à l'extérieur de la cuve 2 du chauffe eau électro ou hydro solaire 30.

Ainsi le tube capillaire 10 est raccordé hermétiquement à la membrane 22 qui se déforme sous l'effet de la dilatation du fluide caloporteur. Le capteur électronique ou jauge 23 est plaqué(e) à la surface de la membrane 22.

La déformation de la membrane 22 est proportionnelle à la dilatation du fluide caloporteur contenu à l'intérieur du tube capillaire 10. Cette déformation de la membrane 22 est transcrite en une variation de résistance exploitable par la carte électronique de pilotage 26.

Ainsi, la quantité d'eau chaude restante à l'intérieur de la cuve 2 peut donc être déterminée par la carte électronique de pilotage 26.

Dans ce type de chauffe eau, on peut décaler le moment de relance, par exemple, en fin de journée.

Avant d'engager cette relance de chauffe, il est nécessaire au préalable de vérifier la quantité d'eau chaude disponible dans la cuve 2 et de la comparer avec le profil de consommation de l'utilisateur pour profiter au maximum de l'apport solaire par exemple.

Sachant que le dispositif de détection électronique 21 suivant la présente invention fournit une information exacte et continue sur la quantité d'eau chaude disponible dans la cuve 2, il est donc possible de coupler ce dernier avec des moyens de contrôle 50 reliés à la carte électronique 26 et permettant de déterminer le profil de consommation d'eau chaude des utilisateurs afin de piloter la ou les périodes et la ou les durées de relance de chauffe de l'eau contenue dans la cuve 2.

Ainsi, le dispositif de pilotage électronique 1 constitué du dispositif de détection électronique 21, des moyens de contrôle 50 et de la carte électronique de pilotage 26 permet de déterminer avec précision et en temps réel le moment optimum de la relance de chauffe.

Les moyens de contrôle 50 sont constitués d'un débitmètre 31 placé, par exemple, sur l'entrée d'eau froide 6 du chauffe eau 30 et d'une sonde de température 32 disposée, par exemple, en sortie d'eau chaude 7, ledit débitmètre 31 et ladite sonde de température 32 étant reliés à la carte électronique de pilotage 26.

Les moyens de contrôle 50 peuvent comporter une sonde de température 33 placée, par exemple, sur l'entrée d'eau froide 6 du chauffe eau 30 et reliée à la carte électronique pilotage 26.

L'adjonction d'une sonde de température 32 placée sur l'entrée d'eau froide 6 du chauffe eau 30 et reliée à la carte électronique 26, permet (connaissant la température de l'eau froide pénétrant dans le chauffe eau à tout moment) d'effectuer les calculs de la quantité d'eau chaude utile disponible (volume d'eau équivalent à 40°C disponible) avec plus de précision qu'en prenant une température d'eau froide moyenne égal par exemple à 12°C.

En effet la température d'eau froide bien que comprise dans une plage connue de température, est variable suivant les régions et les saisons.

On a montré en figure 2 un mode de réalisation préféré de l'invention concernant les moyens de contrôle 50 reliés à la carte électronique 26 et permettant de déterminer le profil de consommation d'eau chaude des utilisateurs afin de piloter la ou les périodes et la ou les durées de relance de chauffe de l'eau contenue dans la cuve 2.

Les moyens de contrôle 50 sont constitués par exemple d'un débitmètre 51, 52 et d'une sonde de température 53, 54 placés respectivement à l'entrée du serpentin 28, 29 constituant l'échangeur thermique destiné à transmettre à l'eau contenue dans le chauffe eau la chaleur issue d'un moyen de chauffage externe autre qu'une résistance électrique (chaudière, pompe à chaleur, capteur solaire), ledit débitmètre 51, 52 et ladite sonde de température 51, 52 étant reliés à la carte électronique de pilotage 26 par des connexions adaptées.

Les moyens de contrôle 50 comporte, par exemple, des sondes de température 55 placées dans la cuve du chauffe eau, de manière à se trouver à proximité des moyens de chauffage 27, 28, 29 (serpentin ou résistance), lesdites sondes de température 55 étant reliées à la carte électronique de pilotage 26 par des connexions adaptées.

Le dispositif d'amplification 15 relié par la connexion 23a à la carte électronique de pilotage 26 permet le pilotage, par exemple, d'au moins une résistance de relance 27 d'un chauffe eau électrique, électro solaire, hydro solaire, ou hydroélectrique.

Le dispositif d'amplification 15 relié par la connexion 23a à la carte électronique de pilotage 26 permet le pilotage de la circulation d'un fluide caloporteur issu d'une chaudière ou d'une pompe à chaleur dans le serpentin 29 se trouvant à l'intérieur de la cuve 2 du chauffe eau 30.

Le dispositif de pilotage 1 permet, au moyen des informations relatives à la quantité d'eau chaude présente dans la cuve 2 du chauffe eau 30 fournies par dispositif de détection électronique 21 constitué du tube capillaire 10 et du dispositif d'amplification 15, de constituer un historique hebdomadaire des profils de consommation d'eau chaude au cours d'une phase d'apprentissage .

La carte électronique de pilotage 26 permet, au moyen des informations fournies par les sondes de température 55 (la présence de ces sondes étant optionnelle), des profils de consommation constitués au cours de la phase d'apprentissage, et des informations relatives à la quantité d'eau chaude contenue dans la cuve 2 du chauffe eau 30, de déclencher au moment le plus opportun, des relances de chauffe effectuées au moyen de la résistance électrique 27 ou du serpentin 29 raccordé à une chaudière ou du serpentin 28 raccordé à une pompe à chaleur ou autre.

Le dispositif de pilotage électronique 1 permet, au moyen des informations continues relatives à la quantité d'eau chaude contenue dans la cuve 2 du chauffe eau 30, de faire évoluer au fil du temps ,les profils de consommation enregistrés lors de la phase d'apprentissage .

Les débitmètres 51, 52 et les sondes de température 53, 54 formant les moyens de contrôle 50 situés à l'entrée des serpentins 28, 29 et reliés à la carte électronique de pilotage 26 permettent, le cas échéant, de connaître les puissances thermiques fournies par la chaudière ou la pompe à chaleur ou le capteur solaire.

En fonction du chauffe eau 30, la carte électronique de pilotage 26 permet le pilotage de la circulation d'un fluide caloporteur issu d'une chaudière dans un serpentin 29 se trouvant à l'intérieur de la cuve 2 d'un chauffe eau hydro solaire 30 ou le pilotage de la circulation d'un fluide caloporteur issu de capteurs solaires dans un serpentin 28 se trouvant à l'intérieur de la cuve 2 d'un chauffe eau électro ou hydro solaire 30.

Ainsi, la carte électronique de pilotage 26 connaissant la quantité d'eau chaude restante dans le ballon et le profil de consommation des utilisateurs, permet de décaler la période de relance de chauffe électrique ou de chauffe par une chaudière annexe, de façon à profiter au maximum de l'apport solaire s'il n'y a pas un besoin immédiat d'une grande quantité d'eau chaude.

Le profil de consommation des utilisateurs peut être connu par programmation (par les utilisateurs) ou par acquisition du profil de consommation par l'intermédiaire des moyens de contrôle 50.

L'acquisition du profil de consommation peut être réalisé par l'intermédiaire des moyens de contrôle 50 permettant de calculer en faisant un historique des quantités d'eau chaude consommées en fonction de l'heure et du jour. Egalement, les moyens de contrôle 50 peuvent être constitués d'une carte de programmation permettant à l'utilisateur de programmer son profil de consommation.

On peut en outre avec ces différentes données (températures d'eau froide et d'eau chaude, débit et durée de consommation d'eau, durée de chauffe électrique ou par chaudière) calculer les parts respectives d'énergie solaire et d'énergie annexe (électrique ou chaudière) consommées pour obtenir la quantité d'eau chaude sanitaire utilisée, permettant ainsi de fournir une information complète à l'utilisateur.

La carte électronique de pilotage 26 peut également assurer d'autres fonctions comme la circulation du fluide dans le serpentin relié au capteur solaire, la programmation ou l'apprentissage du profil de consommation de l'utilisateur, le comptage d'énergie électrique et solaire.

Il doit d'ailleurs être entendu que la description qui précède n'a été donnée qu'a titre d'exemple et qu'elle ne limite nullement le domaine de l'invention dont on ne sortirait pas en remplaçant les détails d'exécution décrits par tous autres équivalents.

## Revendications

1. Dispositif de pilotage pour économiser l'énergie destinée à chauffer l'eau contenue à l'intérieur d'un ballon de stockage et plus particulièrement à l'intérieur d'une cuve (2) d'un chauffe eau (30) comportant une entrée d'eau froide (6) et une sortie d'eau chaude (7), **caractérisé en ce qu'**il comporte :
• un dispositif de détection électronique (21) permettant de mesurer la quantité d'eau chaude restante à l'intérieur de la cuve (2), ledit dispositif de détection électronique (21) étant constitué d'un tube capillaire (10) contenant un fluide caloporteur et d'un dispositif d'amplification (15) disposé à l'extérieur de la cuve (2) du chauffe eau (30) et relié à une carte électronique de pilotage (26), ledit dispositif d'amplification (15) permettant de transmettre sous l'effet de la dilatation du fluide contenu dans le tube capillaire (10) une variation de résistance à la carte électronique de pilotage (26),
• et des moyens de contrôle (50) reliés à la carte électronique de pilotage (26) permettant de déterminer le profil de consommation d'eau chaude des utilisateurs afin de piloter la ou les périodes de relance de chauffe de l'eau contenue dans la cuve (2) dudit chauffe eau (30).

2. Dispositif de pilotage suivant la revendication 1, **caractérisé en ce que** le dispositif de détection électronique (21) comporte un tube capillaire (10) qui est placé soit à l'intérieur, soit à l'extérieur de la cuve (2) du chauffe eau (30).

3. Dispositif de pilotage suivant la revendication 2, **caractérisé en ce que** le tube capillaire (10) est prévu pour faire sensiblement la hauteur de la cuve (2) du chauffe eau (30).

4. Dispositif de pilotage suivant la revendication 1, **caractérisé en ce que** le dispositif de détection électronique (21) comprend un dispositif d'amplification (15) qui est constitué d'une membrane (22) solidaire d'un capteur électronique ou jauge (23) relié(e) par une connexion (23a) à la carte électronique de pilotage (26).

5. Dispositif de pilotage suivant les revendications 2 et 4, **caractérisé en ce que** le tube capillaire (10) est raccordé hermétiquement à la membrane (22) du dispositif d'amplification (15) qui se déforme sous l'effet de la dilatation du fluide caloporteur.

6. Dispositif de pilotage suivant la revendication 1, **caractérisé en ce que** le dispositif d'amplification (15) est relié par une connexion (23a) à la carte électronique de pilotage (26) permettant le pilotage d'au moins une résistance de relance (27) d'un chauffe eau électro ou hydro solaire (30).

7. Dispositif de pilotage suivant la revendication 1, **caractérisé en ce que** le dispositif d'amplification (15) est relié par une connexion (23a) à la carte électronique de pilotage (26) permettant le pilotage de la circulation d'un fluide caloporteur issu d'une chaudière dans un serpentin (29) se trouvant à l'intérieur d'un chauffe eau hydro solaire (30).

8. Dispositif de pilotage suivant la revendication 1, **caractérisé en ce que** le dispositif d'amplification (15) est relié par une connexion (23a) à la carte électronique de pilotage (26) permettant le pilotage de la circulation d'un fluide caloporteur issu de capteurs solaires dans un serpentin (28) se trouvant à l'intérieur d'un chauffe eau électro ou hydro solaire (30).

9. Dispositif de pilotage suivant la revendication 1, **caractérisé en ce que** les moyens de contrôle (50) comportent une sonde de température (33) placée sur l'entrée d'eau froide (6) du chauffe eau (30) et reliée à la carte électronique de pilotage (26).

10. Dispositif de pilotage suivant la revendication 1, **caractérisé en ce que** les moyens de contrôle (50) sont constitués d'un débitmètre (31) placé sur l'entrée d'eau froide (6) du chauffe eau et d'une sonde de température (32) disposée en sortie d'eau chaude (7), ledit débitmètre (31) et ladite sonde de température (32) étant reliés à la carte électronique de pilotage (26).

11. Dispositif de pilotage suivant la revendication 1, **caractérisé en ce que** les moyens de contrôle (50) sont constitués sont constitués d'un débitmètre (51, 52) et d'une sonde de température (53, 54) placés respectivement à l'entrée d'un serpentin (28, 29) se trouvant à l'intérieur de la cuve (2) du chauffe eau (30), lesdits débitmètres (51, 52) et sondes de température (53, 54) étant reliés à la carte électronique de pilotage (26).

12. Dispositif de pilotage suivant la revendication 12, **caractérisé en ce que** les moyens de contrôle (50) sont constitués de sondes de température (55) placées dans la cuve du chauffe eau, de manière à se trouver à proximité d'une résistance (27) et des serpentins (28, 29), lesdites sondes de température (55) étant reliées à la carte électronique de pilotage (26) par des connexions adaptées.
